(19) Europäisches Patentamt / European Patent Office / Office européen des brevets

(11) EP 3 604 432 B1

(12) EUROPEAN PATENT SPECIFICATION

(45) Date of publication and mention of the grant of the patent: **17.08.2022 Bulletin 2022/33**

(21) Application number: **19184886.0**

(22) Date of filing: **08.07.2019**

(51) International Patent Classification (IPC): ***C08L 33/00*** *(2006.01)*

(52) Cooperative Patent Classification (CPC): (C-Sets available) **C08L 33/00** (Cont.)

# (54) POLYMER COMPOSITION

POLYMERZUSAMMENSETZUNG

COMPOSITION POLYMÈRE

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2018 JP 2018142215**

(43) Date of publication of application: **05.02.2020 Bulletin 2020/06**

(73) Proprietor: **SUMITOMO CHEMICAL COMPANY, LIMITED**
**Chuo-ku,**
**Tokyo 104-8260 (JP)**

(72) Inventor: **OKAZAKI, Ryosuke**
**Ehime 792-8521 (JP)**

(74) Representative: **Winter, Brandl - Partnerschaft mbB**
**Alois-Steinecker-Straße 22**
**85354 Freising (DE)**

(56) References cited:
**WO-A1-2017/033871**
**WO-A1-2017/086275**
**JP-A- H0 948 818**
**JP-A- 2008 255 175**
**JP-A- 2012 211 279**
**JP-A- 2017 179 142**
**US-A- 4 789 709**
**US-A1- 2014 036 363**
**US-A1- 2014 128 547**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 604 432 B1

(52) Cooperative Patent Classification (CPC): (Cont.)

C-Sets
**C08F 8/48, C08F 220/14;**
**C08F 220/14, C08F 220/06;**
**C08F 220/14, C08F 220/06, C08F 222/04;**
**C08K 3/10, C08L 33/12;**
**C08K 3/10, C08L 35/00**

## Description

### BACKGROUND OF THE INVENTION

Field of the Invention

The present invention relates to a polymer composition.

Description of the Related Art

A polymer such as polymethyl methacrylate, polystyrene, and a methyl methacrylate-styrene copolymer has excellent characteristics in transparency, mechanical properties, and molding processability, and is therefore used in a wide range of fields such as a member for a vehicle, an electrical member, and an industrial member.

JP-A-9-48818 describes a method for manufacturing a copolymer comprising a 6-membered cyclic acid anhydride unit by subjecting a copolymer comprising a vinyl monomer unit comprising a methacrylic acid and/or acrylic acid unit to a heat treatment to close the ring, in which the copolymer comprises 0.001 to 0.5% by mass of hypophosphite at the time of manufacturing. In this manufacturing method, by converting methacrylic acid and/or acrylic acid into a 6-membered cyclic acid anhydride unit in the copolymer at a very high ring closure ratio, a problem of an increase in water absorbency of the copolymer due to presence of methacrylic acid and/or acrylic acid can be solved. Furthermore, by the presence of 0.001 to 0.5% by mass of hypophosphite, a scarcely colored, colorless, and transparent copolymer can be manufactured. Specifically, Examples describe that a copolymer converted at a ring closure ratio (%) of 95% by weight or more (weight of acid anhydride generated (g)/amount of methacrylic acid added (g) $\times$ 100) is manufactured by performing ring closing granulation of the copolymer at a resin temperature of 280°C or 290°C.

US 2014/036363 A1 is directed to resin compositions for an optical film including an alkyl(meth)acrylate unit, a benzyl(meth)acrylate unit, a (meth)acrylic acid unit, and a ring structural unit such as a glutaric acid anhydride structural unit and further discloses a comparative resin composition containing only a methyl(meth)acrylate unit, a methacrylic acid unit, and a glutaric acid anhydride unit.

### SUMMARY OF THE INVENTION

Conventionally, a halogen lamp has been mainly used for a tail lamp or a headlamp for a vehicle or the like. Therefore, high heat resistance is required for a raw material of an optical member such as an optical lens, and inorganic glass has been generally used. However, in recent years, an LED lamp has been used as a light source for a lamp in place of a conventional halogen lamp. When an LED lamp is used as a light source, an optical member such as an optical lens does not need to have heat resistance to such an extent that inorganic glass has heat resistance.

Accordingly, such a polymer as described in JP-A-9-48818 is used as a raw material of an optical member such as an optical lens, and weight reduction of a lamp unit or the like comprising an optical lens has become possible along therewith.

However, in the future, it is assumed that a higher luminance LED lamp will be used as a light source of a lamp for a vehicle or the like. In addition, it is assumed that, due to the higher luminance of the LED lamp, the optical lens or the like of the light source need to have more resistance to wet heat whitening in a high temperature and high humidity environment than a conventional optical lens. The present inventor has found that sufficiently suitable resistance to wet heat whitening is not exhibited when, for example, the polymer described in JP-A-9-48818 is used as a raw material of an optical member such as an optical lens of such a light source.

Furthermore, the present inventor has found the following problem. That is, although the method for manufacturing a copolymer described in JP-A-9-48818 can manufacture a scarcely colored and transparent copolymer, if the content of a 6-membered cyclic acid anhydride unit in the copolymer is not adjusted within an appropriate predetermined range, the yellowness of a molded article cannot be appropriately suppressed, and in particular, the molded article cannot be suitably used for an optical member such as an optical lens.

An object of the present invention is to provide a polymer composition that can be molded while having excellent resistance to wet heat whitening and suppressing yellowness.

A first aspect of the present invention provides a polymer composition comprising:

(A) a polymer having 0.02 mol% or more and 0.16 mol% or less of a ring structural unit with respect to the total of the ring structural unit and one or two monomer units other than the ring structural unit, wherein the ring structural unit is a glutaric anhydride structural unit and the one monomer unit other than the ring structural unit is methacrylic acid or acrylic acid, and two monomer units other than the ring structural unit are methacrylic acid and methyl methacrylate, or acrylic acid and methyl acrylate; and

(B) 0.1 ppm by mass or more and 2 ppm by mass or less of alkali metal and/or alkaline earth metal with respect to the whole polymer composition, wherein the ratio of the alkali metal and/or the alkaline earth metal contained in the polymer composition is determined by ashing the polymer composition, then dissolving the polymer composition in an acid, and performing measurement with an ICP-MS apparatus.

According to the present invention, the ring structural unit is a glutaric anhydride structural unit.
According to the present invention, the one monomer unit other than the ring structural unit is methacrylic acid or acrylic acid, and two monomer units other than the ring structural unit are methacrylic acid and methyl methacrylate, or acrylic acid and methyl acrylate.
In one embodiment of the first aspect of the present invention, the polymer may be obtained by polymerizing methacrylic acid or acrylic acid, or polymerizing methacrylic acid and methyl methacrylate, or acrylic acid and methyl acrylate.
In the above embodiment of the present invention, the polymer may be obtained by polymerizing methacrylic acid or polymerizing methacrylic acid and methyl methacrylate.
In one embodiment of the first aspect of the present invention, the polymer may comprise as a monomer unit other than the ring structural unit 1 mol% or more and 26 mol% or less of a monomer unit derived from methacrylic acid with respect to the total of the ring structural unit and the one or two monomer units other than the ring structural unit.
According to the present invention, the polymer comprises 0.02 mol% or more and 0.16 mol% or less of the ring structural unit with respect to the total of the ring structural unit and a monomer unit other than the ring structural unit.
In one embodiment of the first aspect of the present invention, the polymer composition may have an MFR value of 1 or more and 7 or less at 230°C under a load of 3.8 kg, wherein the MFR value is measured at 230°C under a load of 3.8 kg by the method defined in JIS K7210-1999.
A second aspect of the present invention provides a molded article comprising the polymer composition according to the first aspect of the present invention.
A third aspect of the present invention provides an optical member comprising the molded article according to the second aspect of the present invention.
The polymer composition according to an embodiment of the present invention can be molded while having excellent resistance to wet heat whitening and suppressing yellowness.

## DETAILED DESCRIPTION OF THE PREFERRED EMBODIMENTS

Hereinafter, an embodiment of the present invention will be described in detail, but the present invention is not limited to the embodiment.

### <Polymer composition>

According to the present invention, a polymer composition comprises:

(A) a polymer comprising 0.02 mol% or more and 0.16 mol% or less of a ring structural unit with respect to the total of the ring structural unit and one or two monomer units other than the ring structural unit, wherein the ring structural unit is a glutaric anhydride structural unit and the one monomer unit other than the ring structural unit is methacrylic acid or acrylic acid, and two monomer units other than the ring structural unit are methacrylic acid and methyl methacrylate, or acrylic acid and methyl acrylate; and
(B) 0.1 ppm by mass or more and 2 ppm by mass or less of alkali metal and/or alkaline earth metal with respect to the whole polymer composition.

Hereinafter, each element, characteristics, and the like of the polymer composition according to the present embodiment will be described in detail.
The polymer (A) comprises a ring structural unit in a main chain, and uses two or more monomers which are polymerizable vinyl monomers as a raw material. The "main chain" is a carbon chain derived from a vinyl group, formed by polymerizing two or more monomers. The "monomer" refers to the state of a raw material before polymerization, and the "monomer unit" refers to the state of each unit linked after polymerization. The phrase "comprising a ring structural unit in a main chain" means that at least two of carbon atoms constituting the main chain serve as a part of the group of atoms forming the ring structure, and as a result, the ring structural unit is incorporated in the main chain. That is, the polymer (A) comprises one or more "ring structural units" and one or more "monomer units other than ring structural units".

(A) Polymer

(Ring structural unit (a))

A ring structural unit (a) of the polymer may be either a ring structural unit that can be formed by ring closure during or after polymerization of two monomers or a ring structural unit in which a ring is incorporated in a main chain by polymerization of one monomer comprising a ring.

The ring structural unit (a) is contained in the polymer at a ratio of 0.02 mol% or more and 0.16 mol% or less with respect to the total of the ring structural unit (a) and one or two monomer units other than the ring structural unit (a). Here, the ratio (mol%) of the ring structural unit (a) contained in the polymer is a numerical value calculated by determining an integral value of peaks in a peak range corresponding to each of various ring structural units by a $^{13}C$-NMR method or a numerical value calculated by using the $^{13}C$-NMR method and further using an auxiliary $^{1}H$-NMR method and/or an IR method depending on the structure of a ring contained. By setting the content of the ring structural unit (a) to 0.02 mol% or more, a copolymer having excellent heat resistance is obtained. Meanwhile, by setting the content of the ring structural unit (a) to 0.16 mol% or less, the yellowness of a molded article of the polymer composition can be suppressed. In particular, when the content of the ring structural unit (a) exceeds 0.16 mol%, the yellowness of a molded article is significantly increased. By adjusting the content of the ring structural unit (a) within an appropriate predetermined range in this way, the yellowness of a molded article thereof can be suppressed, and the molded article is suitably used for an optical member such as an optical lens. The content (mol%) of the ring structural unit (a) in the polymer can be appropriately adjusted by those skilled in the art by considering the type and ratio (mol% or % by mass) of a monomer described later and a polymerization method.

The ring structural unit (a) is a glutaric anhydride structural unit.

•Glutaric anhydride structural unit (a-1)

The following formula (1) indicates a glutaric anhydride structural unit.

[Chemical formula 1]

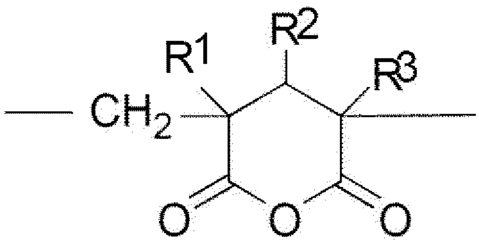

・・・(1)

[In formula (1), $R^1$, $R^2$, and $R^3$ each independently represent a hydrogen atom or a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, still more preferably a substituted or unsubstituted alkyl group having 1 to 6 carbon atoms, and

the alkyl group may be replaced with a hydroxy group.]

The glutaric anhydride structural unit (a-1) can be formed, for example, by cyclocondensation of a polymer obtained from a methacrylate or an acrylate, and methacrylic acid or acrylic acid during or after a polymerization step. In particular, the glutaric anhydride structural unit (a-1) can be formed by cyclocondensation of methacrylic acid, or methacrylic acid and a methacrylate.

(Monomer (b))

A monomer (b) as a raw material of the polymer (A) is not limited as long as being a polymerizable vinyl-based monomer. However, the monomer (b) includes, in a part thereof, a monomer that can form the ring structural unit (a) by ring closure of the monomers (b) or a monomer that comprises a ring structure in the state of the monomer (b) and can be polymerized as it is as the ring structural unit (a). Such a monomer (b) that can be the ring structural unit (a) is contained in the monomer (b) as a raw material so as to comprise the ring structural unit (a) of a finally formed polymer within the above predetermined range. The monomer (b) that does not become the ring structural unit (a) is present as

it is as a monomer unit other than the ring structural unit in the polymer.

For example, the monomer (b) may comprise two or more selected from the group consisting of methacrylic acid, a methacrylate, acrylic acid, and an acrylate. The monomer (b) can comprise methacrylic acid, or methacrylic acid and a methacrylate.

The methacrylate is a monomer represented by the following formula (6).

[Chemical formula 6]

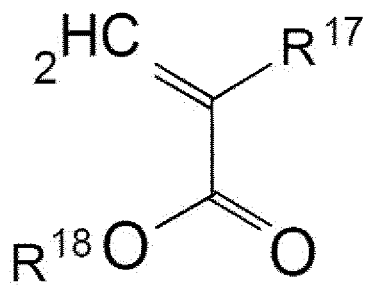

···(6)

[In formula (6), $R^{17}$ represents a methyl group,

$R^{18}$ represents a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, still more preferably a substituted or unsubstituted alkyl group having 1 to 6 carbon atoms, and
the alkyl group may be replaced with a hydroxy group.]

The methacrylate represented by the formula (6) is not particularly limited, and examples thereof include methyl methacrylate, ethyl methacrylate, butyl methacrylate, propyl methacrylate, isopropyl methacrylate, cyclohexyl methacrylate, phenyl methacrylate, (2-ethylhexyl) methacrylate, (t-butylcyclohexyl) methacrylate, benzyl methacrylate, and (2,2,2-trifluoroethyl) methacrylate. As the methacrylate, one type thereof may be used singly, or two or more types thereof may be used in combination.

The acrylate is a monomer represented by the following formula (7).

[Chemical formula 7]

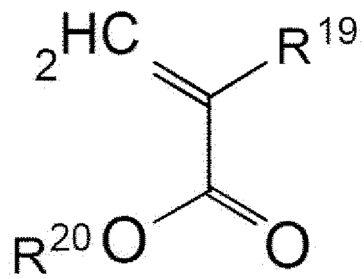

···(7)

[In formula (7), $R^{19}$ represents a hydrogen atom,

$R^{20}$ represents a substituted or unsubstituted alkyl group having 1 to 20 carbon atoms, preferably a substituted or unsubstituted alkyl group having 1 to 12 carbon atoms, more preferably a substituted or unsubstituted alkyl group having 1 to 8 carbon atoms, still more preferably a substituted or unsubstituted alkyl group having 1 to 6 carbon atoms, and
the alkyl group may be replaced with a hydroxy group.]

The acrylate represented by the above formula (7) is not particularly limited, and examples thereof include methyl acrylate, ethyl acrylate, n-propyl acrylate, n-butyl acrylate, sec-butyl acrylate, 2-ethylhexyl acrylate, cyclohexyl acrylate, and phenyl acrylate. As the acrylate, one type thereof may be used singly, or two or more types thereof may be used in combination.

For example, by using methyl methacrylate, methacrylic acid, and styrene as the monomer (b), a structural unit (formula (9)) comprising a glutaric anhydride structural unit (a-1) as illustrated below is formed.

[Chemical formula 9]

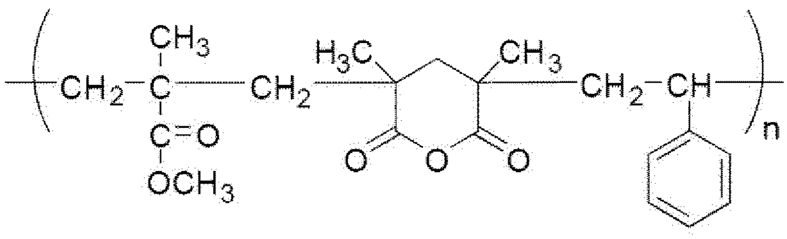

···(9)

Furthermore, by using methyl methacrylate and methacrylic acid as the monomer (b), a structural unit (formula (10)) comprising the following glutaric anhydride structural unit (a-1) is formed.

[Chemical formula 10]

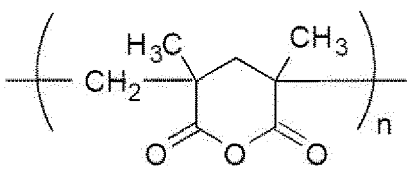

···(10)

For example, by using methyl methacrylate, maleic anhydride, styrene, and α-methylstyrene as the monomer (b), a structural unit (formula (11)) comprising a maleic anhydride structural unit (a-2) as illustrated below is formed.

[Chemical formula 11]

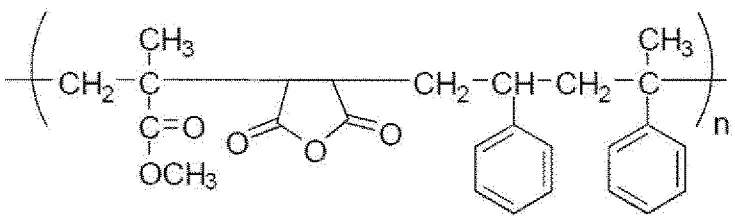

···(11)

The ratio of a monomer unit other than the ring structural unit (a) with respect to the total of the ring structural unit (a) and the monomer unit other than the ring structural unit (a) is a value (mol%) obtained by subtracting the ratio (mol%) of the ring structural unit (a) contained in the polymer from 100 mol%. When the polymer comprises a plurality of monomer units other than the ring structural unit (a), by determining an integral value of peaks in a peak range corresponding to each of the monomer units other than the ring structural unit (a) by the $^{13}C$-NMR method or the like (specifically, by calculating a numerical value also using the auxiliary $^{1}H$-NMR method and IR method as necessary), the ratio of each of the monomer units other than the ring structural unit (a) (mol%) can be determined.

The monomer units other than the ring structural unit (a) may comprise at least one of a monomer unit derived from methacrylic acid (formula (14)), a monomer unit derived from a methacrylate (formula (15)), a monomer unit derived

from acrylic acid (formula (16)), and a monomer unit derived from an acrylate (formula (17)). $R^{18}$ in formula (15) is the same as $R^{18}$ in the above formula (6), $R^{20}$ in formula (17) is the same as $R^{20}$ in the above formula (7), and $R^{21}$ and $R^{22}$ in formula (18) are the same as $R^{21}$ and $R^{22}$ in the above formula (8) .

[Chemical formula 14]

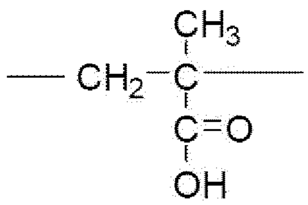

· · ·(14)

[Chemical formula 15]

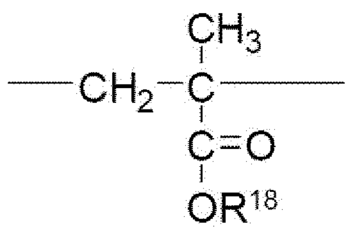

· · ·(15)

[Chemical formula 16]

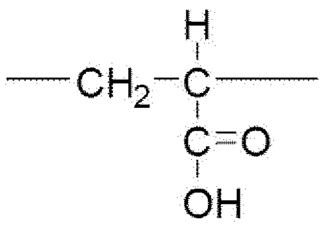

· · ·(16)

[Chemical formula 17]

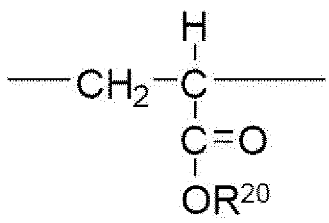

· · ·(17)

For example, when methacrylic acid (or acrylic acid), or methacrylic acid and a methacrylate (acrylic acid and an acrylate) are used as a part or the whole of the monomer (b) as a raw material, monomer units other than the ring structural unit (a) in the polymer may comprise a monomer unit derived from methacrylic acid (or a monomer unit derived from acrylic acid), or a monomer unit derived from methacrylic acid and a monomer unit derived from a methacrylate (or a monomer unit derived from acrylic acid and a monomer unit derived from an acrylate). The methacrylate or the

acrylate is preferably methyl methacrylate or methyl acrylate. In such a case, the monomer units other than the ring structural unit (a) may comprise a monomer unit derived from a methacrylate (or a monomer unit derived from an acrylate) in an amount of 60 mol% or more and 98.99 mol% or less, preferably 74.64 mol% or more and 98.98 mol% or less with respect to the total of the ring structural unit (a) and the monomer units other than the ring structural unit (a). Furthermore, the monomer units other than the ring structural unit (a) may comprise a monomer unit derived from methacrylic acid (or a monomer unit derived from acrylic acid) in an amount of 1 mol% or more and 30 mol% or less, preferably 1 mol% or more and 26 mol% or less, more preferably 6 mol% or more and 26 mol% or less, still more preferably 7.48 mol% or more and 25.2 mol% or less, further still more preferably 10 mol% or more and 25.2 mol% or less with respect to the total of the ring structural unit (a) and the monomer units other than the ring structural unit (a). Furthermore, the monomer units other than the ring structural unit (a) comprise glutaric anhydride obtained by cyclocondensation of a methacrylate and methacrylic acid (or an acrylate and acrylic acid) in an amount of 0.02 mol% or more and 0.16 mol% or less with respect to the total of the ring structural unit (a) and the monomer units other than the ring structural unit (a). By inclusion of a monomer unit derived from methacrylic acid (or a monomer unit derived from acrylic acid) at a ratio (mol%) within such a predetermined lower range than a methacrylate (or an acrylate), when the polymer composition is used as a raw material of an optical member such as an optical lens, the glass transition temperature (Tmg) thereof and the water absorption thereof can be suitable numerical values. Furthermore, by inclusion of many monomer units derived from a methacrylate or an acrylate (in particular, methyl methacrylate or methyl acrylate), the weather resistance of the polymer and the optical characteristics thereof can be enhanced. Even when the monomers (b) are other compounds, those skilled in the art appropriately adjust the content ratio (mol% or % by mass) of each of the monomers (b) in consideration of the type of each of the monomers (b) and the characteristics thereof, and can thereby achieve a desired glass transition temperature (Tmg) and a desired water absorption for the polymer composition.

(B) Alkali metal and/or alkaline earth metal

The alkali metal that may be contained in the polymer composition is an element other than hydrogen, belonging to group 1 of the periodic table, and is specifically Li, Na, K, Rb, Cs, or Fr. The alkaline earth metal contained in the polymer composition according to the present embodiment is an element belonging to group 2 of the periodic table, and is specifically Be, Mg, Ca, Sr, Ba, or Ra. Among these elements, one or more elements selected from the group consisting of Na, K, and Ca, in particular, Na can be used. The polymer composition may comprise only one of the alkali metal and the alkaline earth metal, or may comprise both the alkali metal and the alkaline earth metal.

The alkali metal and/or the alkaline earth metal is contained at a ratio of 0.1 ppm by mass or more and 2 ppm by mass or less, preferably 0.15 ppm by mass or more and 2 ppm by mass or less, more preferably 0.17 ppm by mass or more and 2 ppm by mass, still more preferably 0.2 ppm by mass or more and 2 ppm by mass or less, further still more preferably 0.1 ppm by mass or more and 1.5 ppm by mass or less, further still more preferably 0.2 ppm by mass or more and 1.2 ppm by mass or less, further still more preferably 0.2 ppm by mass or more and 1.2 ppm by mass or less with respect to the whole polymer composition. Here, the ratio of the alkali metal and/or the alkaline earth metal contained in the polymer composition is a numerical value determined by ashing the polymer composition, then dissolving the polymer composition in an acid, and performing measurement with an ICP-MS apparatus. By inclusion of the alkali metal and/or the alkaline earth metal in the polymer composition at a predetermined ratio (ppm by mass) adjusted as described above, the polymer composition can exhibit excellent resistance to wet heat whitening.

The polymer composition may comprise the alkali metal and/or the alkaline earth metal in the form as it is, in a form of a metal ion, or in a form of a salt (for example, sodium dihydrogen phosphate, or sodium polyacrylate).

The polymer composition according to the present embodiment may comprise, as another component, a trace component inevitably mixed therein in a manufacturing step (a residue of an additive such as a polymerization initiator, a polymerization stabilizer, and a molecular weight modifier).

The polymer composition according to the present embodiment may have, for example, a melt flow rate (MFR) value of 1 or more and 7 or less, preferably 2 or more and 6 or less, more preferably 4 or more and 6 or less at 230°C under a load of 3.8 kg. Here, the MFR value is measured at 230°C under a load of 3.8 kg by the method defined in JIS K7210-1999. By setting MFR to such a value, when the polymer composition is used as a raw material of an optical member such as an optical lens, for example, when the polymer composition is subjected to injection molding or the like, suitable flowability is exhibited.

<Method for manufacturing polymer composition>

A method for polymerizing the monomer (b) is not particularly limited, and a well-known polymerization method such as suspension polymerization, solution polymerization, and block polymerization can be adopted. In particular, suspension polymerization can be adopted. Suspension polymerization is performed, for example, by putting water, a polymerization initiator, a chain transfer agent, a suspension stabilizer and, as necessary, another additive in an autoclave,

and supplying a component of the monomer (b) usually under stirring and heating the mixture. The amount of water used is 1 to 5 times, particularly 1 to 3 times the amount of the component of the monomer (b) in terms of volume ratio.

The polymerization initiator is not particularly limited. For example, a known radical polymerization initiator such as a peroxide including lauryl peroxide and 1,1-di(tert-butylperoxy) cyclohexane, and an azo compound including azobisisobutyronitrile can be used. As the polymerization initiator, one type thereof may be used singly, or two or more types thereof may be used in combination.

The chain transfer agent is not particularly limited, and examples thereof include a mercaptan such as n-dodecyl mercaptan (particularly, 1-dodecyl mercaptan), n-butyl mercaptan, n-octyl mercaptan, and 2-ethylhexyl thioglycolate. As the chain transfer agent, one type thereof may be used singly, or two or more types thereof may be used in combination.

Examples of the suspension stabilizer include a water-soluble cellulose ether such as methyl cellulose, hydroxyethyl cellulose, hydroxypropyl cellulose, and hydroxypropyl methyl cellulose. In addition, a water-soluble polymer such as a partially saponified vinyl alcohol, an acrylic acid polymer, and gelatin can also be used.

In suspension polymerization, for example, a slurry-like reaction product obtained after polymerization is dehydrated and washed as necessary, and then dried. After drying, a bead-like polymer composition is obtained. The bead-like polymer composition may be used as it is, or may be further extruded with an extruder (for example, a degassing extruder) to be formed into a pellet-like polymer composition. As described above, not only by selecting the type of the monomer (b) as a raw material and adjusting the ratio (mol% or % by mass) thereof but also by selecting an appropriate polymerization method and conditions thereof, it is possible to manufacture a polymer composition that can suppress the yellowness of a molded article. For example, a granulation temperature at the time of using an extruder is set to a suitable temperature that is not too high (for example, 190°C or higher and 250°C or lower, preferably 210°C or higher and 220°C or lower). Alternatively, for example, residence time in the extruder is set to a suitable time that is not too long. For example, when the screw rotational speed of the extruder is 60 rpm or more and 100 rpm or less, preferably 80 rpm, a throughput is set to 1 kg/Hr or more and 2.0 kg/Hr or less, preferably 1 kg/Hr or more and 1.5 kg/Hr or less in terms of a composition throughput per residence time in the extruder. Alternatively, for example, in a post-treatment, heating for a long time is prevented at a high temperature (for example, about 290°C). By performing appropriate selection and setting as described above, it is possible to prevent significant ring closure condensation.

As a result, the ratio (mol%) of the ring structural unit (a) can be adjusted within the above predetermined range, and the yellowness of a molded article can be suppressed.

By applying various methods in manufacturing the polymer composition, the alkali metal and/or the alkaline earth metal can be contained in the resultant polymer composition at the above adjusted predetermined ratio (ppm by mass). For example, the polymer composition may comprise an alkali metal salt of dihydrogen phosphate or an alkaline earth metal salt of dihydrogen phosphate, particularly sodium dihydrogen phosphate, potassium dihydrogen phosphate, or calcium dihydrogen phosphate in an appropriately adjusted amount.

Alternatively, during polymerization, an additive comprising an alkali metal such as sodium polyacrylate and/or an alkaline earth metal as a suspension stabilizer may be used in an appropriately adjusted amount. Alternatively, also by washing a dehydrated slurry-like reaction product with water or the like (for example, pure water) with an appropriate number of times and amount in a step after suspension polymerization, the amount of the alkali metal and/or the alkaline earth metal contained in the polymer composition can be adjusted.

<Molded article and optical member>

A molded article according to the present embodiment includes the polymer composition of the above embodiment, and can be appropriately formed into a shape according to a desired application. The molded article can be manufactured, for example, by filling the above polymer composition into a cavity of a die having a desired shape, subjecting the polymer composition to a step such as cooling, and taking the polymer composition out of the die.

The optical member according to the present embodiment comprises the above molded article. That is, the optical member comprises the polymer composition of the above embodiment. Therefore, the optical member has excellent resistance to wet heat whitening and suppresses yellowness. The term "optical member" used here means an optical lens, a light guide member, or the like. For example, the optical member means an optical lens or a light guide member that can be used for a general lighting device such as a vehicle light for an automobile and a motorcycle, a street light, a desk lamp, or a general household light.

The optical member according to the present embodiment is usually obtained by subjecting the polymer composition of the above embodiment to injection molding. Specifically, the optical member according to the present embodiment injects and fills the above polymer composition as a molding material into a cavity of a die in a molten state, then cooling the polymer composition, and then removing a molded article from the die. Specifically, for example, the above polymer composition is pelletized and introduced from a hopper into a cylinder. The polymer composition is melted while a screw is rotated, and the screw is retracted. A predetermined amount of the polymer composition is filled into the cylinder, and the molten polymer composition is injected and filled into a die while pressure is applied thereto by

advancing the screw. The pressure is held for a fixed time until the die is sufficiently cooled. Thereafter, the die is opened, and a molded article is taken out. The optical member according to the present embodiment can be thereby manufactured. Conditions for manufacturing the optical member according to the present embodiment (for example, a melting temperature in a cavity of a molding material, a die temperature at the time of injecting the molding material into the die, and pressure to be held after the polymer composition is filled into the die) only need to be set appropriately, and are not particularly limited.

[Examples]

The present invention will be more specifically described using the following Examples and Comparative Examples, but the present invention is not limited thereto. Here, "methacrylic polymer composition" means a composition comprising a polymer obtained by polymerizing methacrylic acid and/or a methacrylate at least in a part.

• Preparation of methacrylic polymer composition

(Example 1)

In a 5 L autoclave equipped with a stirrer, methacrylic acid (hereinafter referred to as MAA, manufactured by Nippon Shokubai Co., Ltd.) and methyl methacrylate (hereinafter referred to as MMA) were mixed at a composition illustrated in Table 1 below to obtain a monomer component. To this monomer component, 0.4 parts by mass of lauryl peroxide ("Laurox K" manufactured by Kayaku Akzo Corporation) as a polymerization initiator and 0.5 parts by mass of 1-dodecyl mercaptan as a chain transfer agent were added with respect to 100 parts by mass of the total of the monomer components, and were dissolve therein. Furthermore, 0.060 parts by mass of hydroxyethyl cellulose (hereinafter referred to as HEC, "SANHEC H" manufactured by Sansho Co., Ltd.) as a suspension stabilizer was dissolved in deionized water with respect to 100 parts by mass of the total of the monomer components to form a suspension polymerization aqueous phase. Then, 150 parts by mass of the aqueous phase was added with respect to 100 parts by mass of the total of the monomer components, and the resulting mixture was subjected to suspension polymerization. An obtained slurry-like reaction solution was dehydrated and washed twice with 40 L of deionized water using a dehydrator ("centrifuge H-122" manufactured by Kokusan Co., Ltd.), and then dried to obtain a bead-like methacrylic polymer composition. This bead-like methacrylic polymer composition was granulated at a screw rotational speed of 80 rpm and a polymer composition temperature of 220°C using a 20 mm vented extruder (ME type Labo Plastomill manufactured by Toyo Seiki Co., Ltd.) at a throughput of 1.5 kg/Hr to obtain a pellet-like methacrylic polymer composition.

(Examples 2 and 3)

A methacrylic polymer composition was obtained in the same manner as Example 1 except that 0.015 parts by mass or 0.075 parts by mass of sodium dihydrogen phosphate (manufactured by Yoneyama Chemical Co., Ltd.) was further dissolved in a suspension polymerization aqueous phase with respect to 100 parts by mass of the total of the monomer components in preparation of the suspension polymerization aqueous phase.

(Examples 4 to 6)

As illustrated in Table 1 below, a methacrylic polymer composition was obtained in the same manner as Example 1 except that the compositional ratios of MAA and MMA were changed.

(Comparative Example 1)

A methacrylic polymer composition was obtained in the same manner as Example 6 except that 0.015 parts by mass of sodium dihydrogen phosphate (manufactured by Yoneyama Chemical Co., Ltd.) was further dissolved in a suspension polymerization aqueous phase with respect to 100 parts by mass of the total of the monomer components in preparation of the suspension polymerization aqueous phase, the resulting solution was granulated to be formed into a pellet shape, and then the pellet was heated at 290°C for two hours using a hot plate ("HPD-3000BZN" manufactured by AS ONE Corporation).

(Comparative Example 2)

A methacrylic polymer composition was obtained in the same manner as Example 1 except that 0.18 parts by mass of sodium dihydrogen phosphate (manufactured by Yoneyama Chemical Co., Ltd.) was further dissolved in a

suspension polymerization aqueous phase with respect to 100 parts by mass of the total of the monomer components in preparation of the suspension polymerization aqueous phase.

(Comparative Example 3)

A methacrylic polymer composition was obtained in the same manner as Example 2 except that 0.015 parts by mass of sodium polyacrylate (hereinafter referred to as PMA) as a suspension stabilizer was further dissolved in a suspension polymerization aqueous phase with respect to 100 parts by mass of the total of the monomer components in preparation of the suspension polymerization aqueous phase.

(Comparative Example 4)

A methacrylic polymer composition was obtained in the same manner as Example 3 except that a slurry-like reaction solution obtained in the middle of preparation was not washed after dehydration.

(Comparative Example 5)

A methacrylic polymer composition was obtained in the same manner as Example 6 except that granulation was performed to form a pellet shape, and then the pellet was heated at 290°C for six hours using a hot plate ("HPD-3000BZN" manufactured by AS ONE Corporation).

(Comparative Example 6)

A methacrylic polymer composition was obtained in the same manner as Example 1 except that granulation was performed to form a pellet shape, and then the pellet was heated at 290°C for two hours using a hot plate ("HPD-3000BZN" manufactured by AS ONE Corporation).
Table 1 below illustrates polymerization formulation of the methacrylic polymer compositions in Examples 1 to 6 and Comparative Examples 1 to 6 and post-treatment steps thereof.

[Table 1]

| | MMA | MAA | HEC | Sodium dihydrogen phosphate | PMA | Remarks |
|---|---|---|---|---|---|---|
| | Parts by mass | Parts by mass | Parts by mass | Parts by mass | Parts by mass | |
| Example 1 | 93.9 | 6.1 | 0.060 | - | - | - |
| Example 2 | 93.9 | 6.1 | 0.060 | 0.015 | - | - |
| Example 3 | 93.9 | 6.1 | 0.060 | 0.075 | - | - |
| Example 4 | 98 .5 | 1.5 | 0.060 | - | - | - |
| Example 5 | 81.8 | 18.2 | 0.060 | - | - | - |
| Example 6 | 76.8 | 23.2 | 0.060 | - | - | - |
| Comparative Example 1 | 76.8 | 23.2 | 0.060 | 0.015 | - | 290°C Heated for two hours |
| Comparative Example 2 | 93.9 | 6.1 | 0.060 | 0 .18 | - | - |
| Comparative Example 3 | 93.9 | 6.1 | 0.060 | 0.015 | 0.015 | - |
| Comparative Example 4 | 93.9 | 6.1 | 0.060 | 0.075 | - | Suspension slurry No pure water washing step |
| Comparative Example 5 | 76.8 | 23.2 | 0.060 | - | - | 290°C Heated for six hours |

(continued)

| | MMA | MAA | HEC | Sodium dihydrogen phosphate | PMA | Remarks |
|---|---|---|---|---|---|---|
| | Parts by mass | Parts by mass | Parts by mass | Parts by mass | Parts by mass | |
| Comparative Example 6 | 93.9 | 6.1 | 0.060 | - | - | 290°C Heated for two hours |

•Analysis

<Analysis of copolymer composition>

The copolymer compositions of the methacrylic polymer compositions obtained in Examples 1 to 6 and Comparative Examples 1 to 6 were analyzed. The copolymer compositions were determined by measuring $^{13}C$-NMR with a nuclear magnetic resonance apparatus ("Avance 600" (10 mm cryoprobe) manufactured by Bruker). Deuterated chloroform was used as a measurement solvent, a measurement temperature was set to 27°C, and measurement was performed by an inverse gate proton decoupling method. Pulse repetition time was set to 20 seconds, the number of integrations was set to 4000, and chloroform was used as a chemical shift value standard. A value of MMA was determined from an integral value of peaks at 173.0 to 180.4 ppm. A value of MAA was determined from an integral value of peaks at 180.4 to 188.0 ppm. A value of a glutaric anhydride structure formed by cyclocondensation of MMA and MAA was determined from an integral value of peaks at 170.0 to 173.0 ppm.

<Analysis of sodium content>

The sodium content in each of the methacrylic polymer compositions obtained in Examples 1 to 6 and Comparative Examples 1 to 6 was analyzed. Each of the methacrylic polymer compositions was ashed and then dissolved in acid, and the sodium content was measured using an ICP-MS apparatus ("ELAN DRCII" manufactured by Perkin Elmer). As measurement conditions, RF power was set to 1.5 kW, a plasma gas flow rate was set to 17 L/min, an auxiliary gas flow rate was set to 1.4 L/min, and a sample introduction amount was set to 100 μL/min.

Table 2 below illustrates analysis results of the copolymer composition and the sodium content together with the following measurement and evaluation results.

•Measurement and evaluation

<Measurement of yellowness>

The yellowness of each of molded pieces of the methacrylic polymer compositions obtained in Examples 1 to 6 and Comparative Examples 1 to 6 was measured. Each of the obtained methacrylic polymer compositions was dried at 90°C for 12 hours, and then was subjected to press molding at a press temperature of 220°C using a press molding machine (Shindo type ASF hydraulic press manufactured by Shinto Metal Industries, Ltd.) to obtain a test molded piece having a thickness of 3 mm (50 mm × 50 mm × 3 mm). Subsequently, the yellowness of each of the obtained test molded pieces was measured using a color information measuring device ("HR-100" manufactured by Murakami Color Research Laboratory) at 3 mmt according to JIS K7361-1.

<Measurement of wet heat whitening degree>

In order to evaluate resistance to wet heat whitening of each of the molded pieces of the methacrylic polymer compositions obtained in Examples 1 to 6 and Comparative Examples 1 to 6, the wet heat whitening degree thereof before and after a wet heat test was measured. Similarly to the measurement of the yellowness, each of the methacrylic polymer compositions was subjected to press molding to obtain a test piece of 50 mm × 50 mm × 3 mm. Subsequently, each of the obtained test molded pieces was allowed to stand for 200 hours in an environmental tester (a light specification thermo-hygrostat "LHU-113" manufactured by ESPEC Corp.) set at a temperature of 80°C and a humidity of 95%. The haze value of each of the test molded pieces before and after the test was measured according to JIS K7136 using a color information measuring device ("SD-7000" manufactured by Nippon Denshoku Kogyo Co., Ltd.). A difference in

haze value between before and after the test was determined as the wet heat whitening degree (%).

<Evaluation of glass transition temperature>

A glass transition temperature was evaluated in order to confirm whether the methacrylic polymer compositions obtained in Examples 1 to 6 and Comparative Examples 1 to 6 can be suitably used as raw materials of a lamp cover. The glass transition temperature (Tmg) (°C) of each of the methacrylic polymer composition samples was measured according to JIS-K7121. As a measuring device, a differential scanning calorimeter ("DSC 7020" manufactured by Hitachi High-Tech Science Co., Ltd.) was used under a condition of a nitrogen gas flow rate of 50 mL/min. First, the temperature was raised from room temperature (23°C) to 150°C (primary temperature rise) at 20°C/min, held at 150°C for five minutes to completely melt each of the samples. Thereafter, the temperature was lowered from 150°C to -35°C at 10°C/min and held at -35°C for one minute, and the temperature was further raised again to 210°C at 10°C/min (secondary temperature rise). In a DSC curve drawn during this time, an intersection (midpoint glass transition temperature) between a step change curve during the secondary temperature rise and a straight line equidistant from each of baseline extension lines in a vertical axis direction was measured as a glass transition temperature (Tmg) (°C). Two points were measured per sample, and an arithmetic mean of the two points (rounded off after the decimal point) was taken as a measured value.

<Evaluation of water absorption>

Water absorption was evaluated in order to confirm whether the methacrylic polymer compositions obtained in Examples 1 to 6 and Comparative Examples 1 to 6 can be suitably used as raw materials of an optical member. Similarly to the measurement of the whitening degree, each of the methacrylic polymer compositions was subjected to press molding to obtain a test piece of 50 mm × 50 mm × 3 mm. Each of the obtained test molded pieces was dried in a dryer at 80°C for 24 hours, and the dry mass of each of the test molded pieces was precisely measured. Thereafter, each of the test molded pieces was immersed in warm water at 80°C for 120 hours, and the mass after immersion was precisely measured. Water absorption was calculated by the following formula.

$$\text{Water absorption (\%)} = \{([\text{mass after immersion}] - [\text{mass in dry state}])/[\text{mass in dry state}]\} \times 100$$

Table 2 below illustrates analysis results, and evaluation and measurement results.

[Table 2]

| | MMA | MAA | Glutaric anhydride | Sodium content | Yellowness | Wet heat test whitening degree | Tmg | Water absorption |
|---|---|---|---|---|---|---|---|---|
| Unit | mol% | mol% | mol% | ppm by mass | - | % | °c | % by mass |
| Example 1 | 91.33 | 8.52 | 0.15 | 0.1 | 0.5 | 0.1 | 122.3 | 3.7 |
| Example 2 | 91.78 | 8.10 | 0.12 | 0.2 | 1.2 | 0.4 | 122.4 | 3.5 |
| Example 3 | 92.41 | 7.48 | 0.11 | 1.2 | 1.2 | 1.6 | 121.7 | 3.5 |
| Example 4 | 98.98 | 1.00 | 0.02 | 0.1 | 1.0 | 0.2 | 117.4 | 2.7 |
| Example 5 | 79.74 | 20.11 | 0.15 | 0.1 | 0.7 | 0.3 | 147.4 | 6.4 |
| Example 6 | 74.64 | 25.20 | 0.16 | 0.2 | 0.6 | 0.3 | 150.2 | 7.3 |
| Comparative Example 1 | 87.38 | 8.52 | 4.10 | 0.2 | 2.2 | 0.6 | 122.7 | 3.7 |
| Comparative Example 2 | 91.88 | 8.00 | 0.13 | 2.5 | 1.3 | 4.5 | 122.2 | 3.5 |
| Comparative Example 3 | 92.16 | 7.72 | 0.12 | 12 | 3.8 | 4.8 | 122.4 | 3.4 |

(continued)

| | MMA | MAA | Glutaric anhydride | Sodium content | Yellowness | Wet heat test whitening degree | Tmg | Water absorption |
|---|---|---|---|---|---|---|---|---|
| Comparative Example 4 | 92.41 | 7.48 | 0.11 | 3.8 | 0.6 | 4.4 | 122.2 | 3.6 |
| Comparative Example 5 | 72.25 | 15.65 | 12.10 | 0.2 | 6.3 | 0.7 | 148.2 | 4.2 |
| Comparative Example 6 | 91.84 | 5.96 | 2.2 | 0.1 | 2.1 | 0.3 | 122.3 | 3.5 |

As can be seen from Tables 1 and 2 above, in Comparative Example 2, the amount of sodium dihydrogen phosphate dissolved in preparation of the suspension polymerization aqueous phase was larger than those in Examples 1 to 3 (not dissolved in Example 1), and therefore the sodium content of the methacrylic polymer composition was large.

In Comparative Example 3, the amount of sodium dihydrogen phosphate dissolved was similar to that in Example 2, but PMA was further dissolved as a suspension stabilizer, and therefore the sodium content of the methacrylic polymer composition was significantly large. In Comparative Example 4, the amount of sodium dihydrogen phosphate dissolved was similar to that in Example 3, but the slurry-like reaction solution was not washed after dehydration, and therefore it is considered that sodium remained. The sodium content of the methacrylic polymer composition was large. In Comparative Examples 2 to 4, the wet heat test whitening degree (%) was significantly larger than those in Examples 1 to 3. Therefore, it has been found that resistance to wet heat whitening is significantly poor when the sodium content in the polymer composition is larger than a predetermined numerical range.

In Comparative Example 5, sodium dihydrogen phosphate was not dissolved in preparation of the suspension polymerization aqueous phase as compared with Comparative Example 1, but heating was performed at 290°C for four hours longer in the post-treatment, and therefore MMA and MAA caused a reaction and ring closure in a larger amount, and the ratio of a glutaric anhydride was higher. In Comparative Example 5, the yellowness of the methacrylic polymer composition was significantly larger than that in Comparative Example 1, and therefore it has been found that the yellowness is large when the number of ring structural units in the polymer composition is larger than a predetermined ratio (mol%). In Examples 4 to 6 in which only the compositional ratios of MMA and MAA as raw materials were different from Example 1, no problem was found in the wet heat test whitening degree (%) and the yellowness. Furthermore, in any one of Examples 1 to 6 and Comparative Examples 1 to 6, as the Tmg value and the water absorption, numerical values that could be suitably applied as a raw material of an optical member such as an optical lens were obtained.

From these results, it can be understood that it is possible to obtain a polymer composition that can be molded while having excellent resistance to wet heat whitening and suppressing yellowness by adjusting the sodium content in the polymer composition and the ratio of the ring structural unit in the polymer within predetermined ranges.

The polymer composition according to an embodiment of the present invention can be molded while having excellent resistance to wet heat whitening and suppressing yellowness, and can be suitably used as an optical lens, a light guide member, or the like for a general lighting device such as a vehicle light for an automobile and a motorcycle, a street light, a desk lamp, or a general household light.

## Claims

**1.** A polymer composition comprising:

(A) a polymer consisting of 0.02 mol% or more and 0.16 mol% or less of a ring structural unit with respect to a total of the ring structural unit and one or two monomer units other than the ring structural unit, wherein the ring structural unit is a glutaric anhydride structural unit and the one monomer unit other than the ring structural unit is methacrylic acid or acrylic acid, and two monomer units other than the ring structural unit are methacrylic acid and methyl methacrylate, or acrylic acid and methyl acrylate; and

(B) 0.1 ppm by mass or more and 2 ppm by mass or less of alkali metal and/or alkaline earth metal with respect to the whole polymer composition, wherein the ratio of the alkali metal and/or the alkaline earth metal contained in the polymer composition is determined by ashing the polymer composition, then dissolving the polymer composition in an acid, and performing measurement with an ICP-MS apparatus.

**2.** The polymer composition according to claim 1, wherein the polymer is obtained by polymerizing methacrylic acid or acrylic acid, or polymerizing methacrylic acid and methyl methacrylate, or acrylic acid and methyl acrylate.

**3.** The polymer composition according to claim 2, wherein the polymer is obtained by polymerizing methacrylic acid, or polymerizing methacrylic acid and methyl methacrylate.

**4.** The polymer composition according to any one of claims 1 to 3, wherein the polymer comprises as a monomer unit other than the ring structural unit 1 mol% or more and 26 mol% or less of a monomer unit derived from methacrylic acid with respect to a total of the ring structural unit and the one or two monomer units other than the ring structural unit.

**5.** The polymer composition according to any one of claims 1 to 4, wherein the polymer composition has an MFR value of 1 or more and 7 or less at 230°C under a load of 3.8 kg, wherein the MFR value is measured at 230°C under a load of 3.8 kg by the method defined in JIS K7210-1999.

**6.** A molded article comprising the polymer composition according to any one of claims 1 to 5.

**7.** An optical member comprising the molded article according to claim 6.

## Patentansprüche

**1.** Polymerzusammensetzung umfassend :

(A) ein Polymer, das aus 0,02 Mol-% oder mehr und 0,16 Mol-% oder weniger einer ringstrukturellen Einheit mit Bezug auf ein Ganzes der ringstrukturellen Einheit und einer oder zwei Monomereinheiten, außer der ringstrukturellen Einheit, besteht, wobei die ringstrukturelle Einheit eine strukturelle Glutarsäureanhydrideinheit ist und die eine Monomereinheit außer der ringstrukturellen Einheit Methacrylsäure oder Acrylsäure ist und zwei Monomereinheiten außer der ringstrukturellen Einheit Methacrylsäure und Methylmethacrylat oder Acrylsäure und Methylacrylat sind; und
(B) 0,1 ppm oder mehr, auf die Masse bezogen, und 2 ppm oder weniger, auf die Masse bezogen, Alkalimetall und/oder Erdalkalimetall mit Bezug auf die ganze Polymerzusammensetzung, wobei das Verhältnis des Alkalimetalls und/oder des Erdalkalimetalls, die in der Polymerzusammensetzung enthalten sind, durch Veraschen der Polymerzusammensetzung, dann Lösen der Polymerzusammensetzung in einer Säure und Ausführen der Messbestimmung mit einem ICP-MS-Gerät bestimmt wird.

**2.** Polymerzusammensetzung nach Anspruch 1, wobei das Polymer durch Polymerisieren von Methacrylsäure oder Acrylsäure oder Polymerisieren von Methacrylsäure und Methylmethacrylat oder Acrylsäure und Methylacrylat erhalten wird.

**3.** Polymerzusammensetzung nach Anspruch 2, wobei das Polymer durch Polymerisieren von Methacrylsäure oder Polymerisieren von Methacrylsäure und Methylmethacrylat erhalten wird

**4.** Polymerzusammensetzung nach einem der Ansprüche 1 bis 3, wobei das Polymer als Monomereinheit, außer der ringstrukturellen Einheit, 1 Mol-% oder mehr und 26 Mol-% oder weniger einer Monomereinheit, die von Methacylsäure abgeleitet ist, mit Bezug auf ein Ganzes einer ringstrukturellen Einheit, und die eine oder zwei Monomereinheiten, außer der ringstrukturellen Einheit, umfasst.

**5.** Polymerzusammensetzung nach einem der Ansprüche 1 bis 4, wobei die Polymerzusammensetzung einen MFR-Wert von 1 oder mehr und 7 oder weniger bei 230 °C unter einer Belastung von 3,8 kg aufweist, wobei der MFR-Wert bei 230° C unter einer Belastung von 3,8 kg durch das in JIS K7210-1999 definierte Verfahren gemessen wird.

**6.** Geformter Artikel umfassend die Polymerzusammensetzung nach einem der Ansprüche 1 bis 5.

**7.** Optisches Element umfassend den geformten Artikel nach Anspruch 6.

## Revendications

1. Composition polymère comprenant :

   (A) un polymère constitué de 0,02 % en mole ou plus et de 0,16 % en mole ou moins d'un motif structurel annulaire par rapport à un total du motif structurel annulaire et d'un ou de deux motifs monomères autres que le motif structurel annulaire, dans laquelle le motif structurel annulaire est un motif structurel anhydride glutarique et l'autre motif monomère autre que le motif structurel annulaire est l'acide méthacrylique ou l'acide acrylique, et deux motifs monomères autres que le motif structurel annulaire sont l'acide méthacrylique et le méthacrylate de méthyle, ou l'acide acrylique et l'acrylate de méthyle ; et
   (B) 0,1 ppm en masse ou plus et 2 ppm en masse ou moins de métal alcalin et/ou de métal alcalino-terreux par rapport à la composition polymère totale, dans laquelle le rapport du métal alcalin et/ou du métal alcalino-terreux contenus dans la composition polymère est déterminé par calcination de la composition polymère, puis dissolution de la composition polymère dans un acide, et réalisation de la mesure avec un appareil d'ICP-MS.

2. Composition polymère selon la revendication 1, dans laquelle le polymère est obtenu par polymérisation d'acide méthacrylique ou d'acide acrylique, ou polymérisation d'acide méthacrylique et de méthacrylate de méthyle, ou d'acide acrylique et d'acrylate de méthyle.

3. Composition polymère selon la revendication 2, dans laquelle le polymère est obtenu par polymérisation d'acide méthacrylique, ou polymérisation d'acide méthacrylique et de méthacrylate de méthyle.

4. Composition polymère selon l'une quelconque des revendications 1 à 3, dans laquelle le polymère comprend comme motif monomère, autre que le motif structurel annulaire, 1 % en mole ou plus et de 26 % en mole ou moins d'un motif monomère dérivé de l'acide méthacrylique par rapport à un total du motif structurel annulaire, et lesun ou deux motifs monomères autres que le motif structurel annulaire.

5. Composition polymère selon l'une quelconque des revendications 1 à 4, dans laquelle la composition polymère a une valeur MFR de 1 ou plus et de 7 ou moins à 230 °C sous une charge de 3,8 kg, dans laquelle la valeur MFR est mesurée à 230 °C sous une charge de 3,8 kg selon le procédé défini dans la norme JIS K7210-1999.

6. Article moulé comprenant la composition polymère selon l'une quelconque des revendications 1 à 5.

7. Élément optique comprenant l'article moulé selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9048818 A
- US 2014036363 A1